(19) Europäisches Patentamt
European Patent Office
Office européen des brevets

(11) **EP 4 106 161 A1**

(12) **EUROPEAN PATENT APPLICATION**

(43) Date of publication:
**21.12.2022 Bulletin 2022/51**

(21) Application number: **21180406.7**

(22) Date of filing: **18.06.2021**

(51) International Patent Classification (IPC):
***H02K 41/03*** (2006.01)     ***H02K 16/02*** (2006.01)

(52) Cooperative Patent Classification (CPC):
**H02K 41/031;** H02K 16/02

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Isochronic AG**
**1026 Denges (CH)**

(72) Inventors:
• **HAAS, Melvin**
  **1095 Lutry (CH)**
• **BUCHS, Pierre-Alain**
  **1432 Belmont-sur-Yverdon (CH)**

(74) Representative: **reuteler & cie SA**
**Chemin de la Vuarpillière 29**
**1260 Nyon (CH)**

(54) **DOUBLE-SIDED LINEAR MOTOR**

(57) Linear motor (2) comprising a stator (4) having first and second guides (12) on opposite sides of the stator, and at least two sliders (6) including a first slider (6a) and a second slider (6b) mounted respectively on said first and second guides (12) on opposite outer sides of the stator. Each slider comprises a slider frame (22) having a guide portion (24) slidingly coupled to the guides (12) of the stator. Each slider comprises an electromagnet connected to a controller (8), a first controller (8a) connected to the electromagnet (26) of the first slider and a second controller (8b) connected to the electromagnet of the second slider (6b) for independent control of displacement of each of the first and second sliders, each slider configured to carry a functional member (30) such as a tool, sensor or gripper. The stator (4) comprises a single permanent magnet assembly (14) without any central ferromagnetic core, formed of a row of juxtaposed magnetic segments (16) of changing polarity, the permanent magnet assembly coupling electromagnetically to the electromagnets of both first and second sliders.

FIG 2

## Description

The present invention relates to a linear motor with a plurality of sliders.

Linear motors with one or two sliders are used in various applications, for instance in pick and place machines. In such applications, each slider typically carries a gripper or other holding tool configured to pick, hold and release an object as it is being transported along the linear stator. Linear motors may be used in many automated machines and robots for linear transport of a tool that may be used for a wide variety of applications including for instance welding, laser marking or cutting, bonding, pick and place. In certain applications, in particular in pick and place applications, there is an advantage in having more than one slider along a stator in order to increase the number of operations that can be performed in a given time.

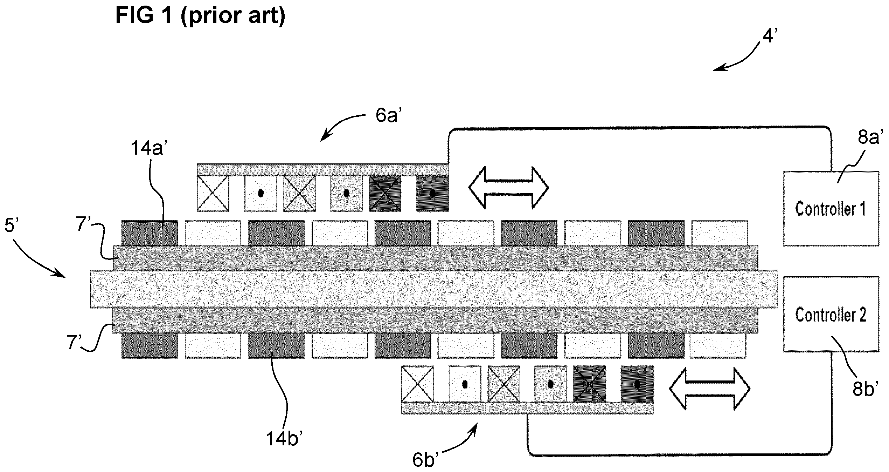

Figure 1 illustrates schematically an example of a known linear motor configuration having a stator 4' and a pair of sliders 6a', 6b' arranged on opposite outer sides of the stator. The stator comprises a core 5' carrying ferromagnetic plates 7', flanked on either side by permanent magnet assemblies 14'a, 14'b, each row of magnets being configured to couple electromagnetically with a respective slider 6a', 6b' to form a pair of oppositely arranged linear motors. Each slider is connected to a controller 8a', 8b' for independent control of the sliders 6a', 6b'. Such linear motors may be placed on movable carriages, robotic arms or other movable elements such that the tools carried by the linear motors may be actuated along one-, two- or three dimensions. The mass of the linear motor, and in particular of the stator is thus of importance since in most applications there is a desire to reduce inertia and increase acceleration of machine components. There is also a continuous desire to reduce the cost of machines.

In view of the foregoing, it is an object of this invention to provide a linear motor with at least two independently controlled sliders that is light and fast.

It is advantageous to provide a linear motor with at least two sliders that is economical to manufacture and use.

It is advantageous to provide a linear motor with two or more sliders that is compact.

It is advantageous to provide a linear motor with two or more sliders that is adapted for use in pick and place machines.

For pick and place applications, it is a specific object of the invention to provide a linear motor that has high performance, in particular that has a high acceleration and deceleration capability and is economical to produce.

Objects of this invention have been achieved by providing the linear motor according to claim 1. Dependent claims set forth various advantageous features of the invention.

Disclosed herein is a linear motor comprising a stator having first and second guides on opposite sides of the stator, and at least two sliders including a first slider and a second slider mounted respectively on said first and second guides on opposite outer sides of the stator. Each slider comprises a slider frame having a guide portion slidingly coupled to the guides of the stator. Each slider comprises an electromagnet connected to a controller, a first controller connected to the electromagnet of the first slider and a second controller connected to the electromagnet of the second slider for independent control of displacement of each of the first and second sliders. Each slider is configured to carry a functional member such as a tool, sensor or gripper.

The stator comprises a single permanent magnet assembly without any central ferromagnetic core, formed of a row of juxtaposed magnetic segments of changing polarity, the permanent magnet assembly coupling electromagnetically to the electromagnets of both first and second sliders.

In an advantageous embodiment, the magnetic segments of the permanent magnet assembly are embedded in a non-ferromagnetic binding material.

In an advantageous embodiment, the non-ferromagnetic binding material includes any one of a thermosetting polymer, a thermoplastic polymer, an epoxy resin.

In an advantageous embodiment, the electromagnet of each of the first and second sliders comprises a plurality of coils mounted on a slider frame of a non-ferromagnetic material.

In an advantageous embodiment, each of the first and second sliders comprise a ferromagnetic backing plate positioned on an outer side of the coils with respect to the permanent magnet assembly and extending across said plurality of coils.

In an advantageous embodiment, the ferromagnetic backing plate has a substantially rhombus shape.

In an advantageous embodiment, the rhombus shape is inclined at an inclination angle $\beta$ between 0.7 $\alpha$

$$\alpha = \arctan\left(\frac{\tau_p}{Z}\right),$$

and 1.6 $\alpha$ where $\alpha$ is given by where Z is the magnet segment height in a direction orthogonal to the slider displacement direction and $2\tau_p$ is the magnetic period.

In an advantageous embodiment, the inclination angle $\beta$ is between 0.9 $\alpha$ and 1.1 $\alpha$.

In an advantageous embodiment, the rhombus shape is inclined at an inclination angle $\beta$ between 5° and 45°, preferably between 5° and 30°, more preferably between 10° and 25° with respect to an axis orthogonal to the direction of translation of the sliders.

In an advantageous embodiment, the ferromagnetic backing plate comprises a plurality of slots configured to reduce eddy currents.

Further advantages aspects and features of the invention will be apparent from the detailed description of embodiments of the invention and annexed figures.

Figure 1 is a schematic cross-sectional view of a section of a linear motor according to the prior art;

Figure 2 is a perspective view of a section of linear motor according to an embodiment of the invention;

Figure 3a is a side view of the embodiment illustrated in figure 2;

Figure 3b is a top view of the embodiment of figure 3a;

Figure 3c is an end view of the embodiment of figure 3a;

Figure 4a is a simplified schematic perspective view of a permanent magnet assembly and sliders of a linear motor according to an embodiment of the invention;

Figure 4b is a side view of the embodiment of figure 4a (showing only one of the sliders);

Figure 4c is top view of the variant of figure 4a showing a magnetic coupling of the ferromagnetic backing plate with the permanent magnet assembly;

Figure 5a is a simplified schematic perspective view of a permanent magnet assembly with alternating -N-S-N-S- magnet segments according to a first embodiment;

Figure 5b is a simplified schematic perspective view of a permanent magnet assembly with alternating -N-iron-S-iron-N-iron-S- magnet and ferromagnetic segments according to a second embodiment.

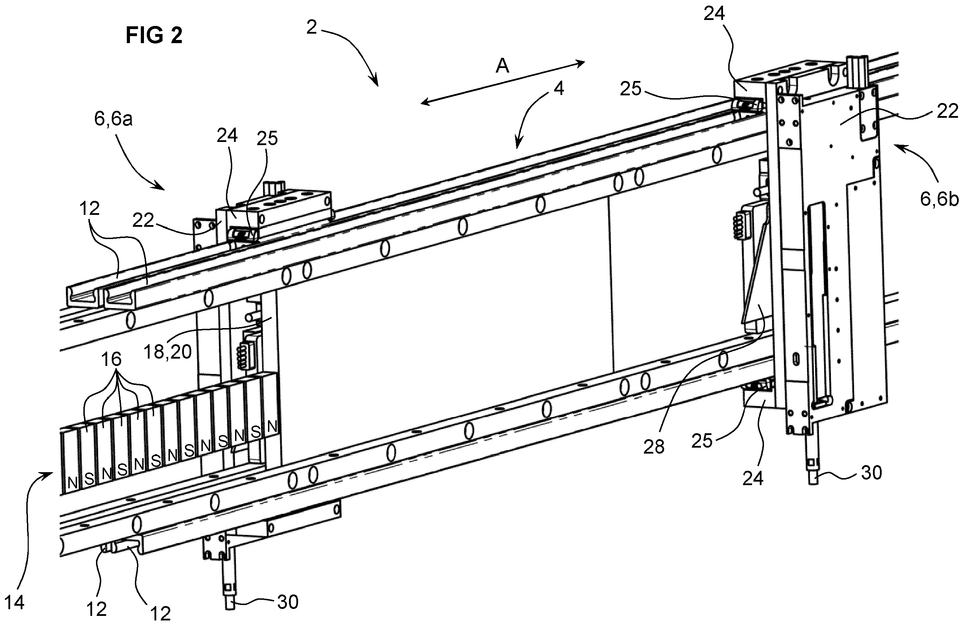

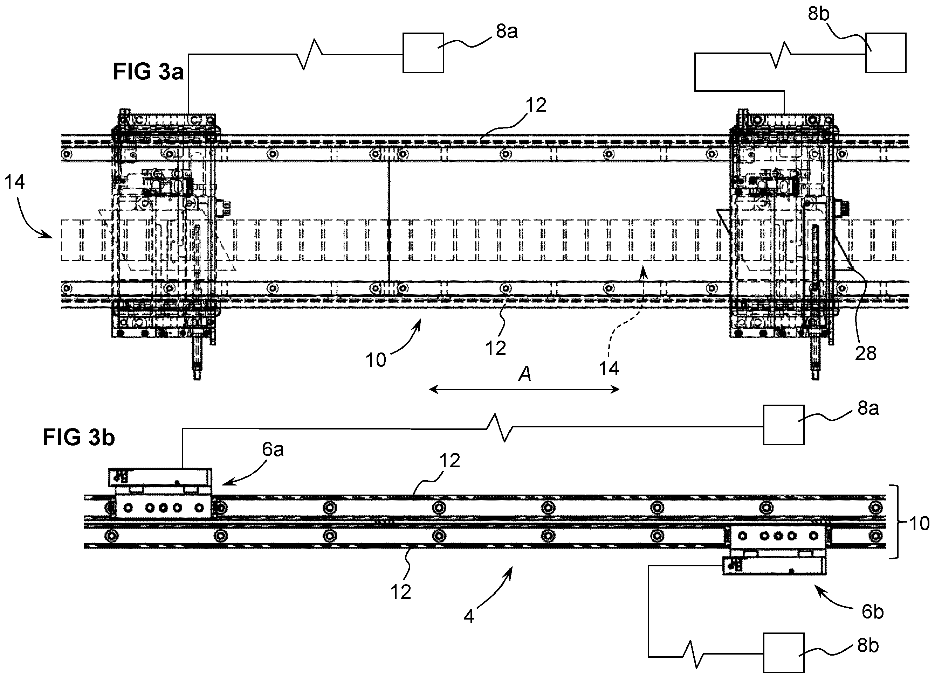

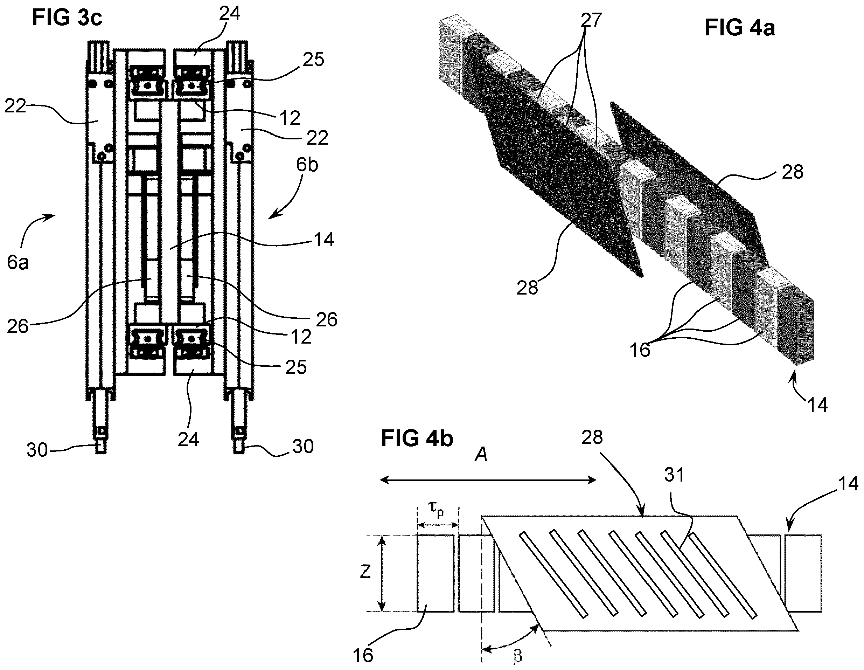

Referring to figures 2 to 4c, a linear motor 2 according to embodiments of the invention comprises a stator 4, at least two sliders 6 including a first slider 6a and second slider 6b, and a controller including a first controller or a first controller channel 8a connected to the first slider 6a and a second controller or second controller channel 8b connected to the second slider 6b.

The first and second sliders 6a, 6b are mounted on opposing outer sides of the linear motor and are independently controlled by their respective first and second controllers 8a, 8b to perform independent linear movement along the stator. This independent linear movement of the sliders 6a, 6b is particularly useful in pick and place operations where within a limited space there are at least two grippers able to pick and place articles independently thus increasing the rate of pick and place. The linear motor may form part of a transverse arm, for instance extending across a pair of conveyor transport systems, each end of the arm being mounted on a movable carriage with a direction of displacement generally orthogonal to the direction of movement **A** of the sliders in order to perform a 2D displacement of the tool or gripper or other functional element 30 mounted on the slider. Such an application is described for instance in European patent publication EP3509973A1.

The stator 4 comprises or is mounted on a support frame 10 that may have various configurations depending on the application and apparatus in which the stator is mounted. The stator comprises top and bottom guides 12 on opposite outer sides of the stator on which the sliders 6a, 6b are slidably mounted and guided. The guiding may be via a slide bearing, an air bearing, a lubricated bearing, a roller bearing 25 or other *per se* known bearings. The slider 6 may carry various functional elements 30, including grippers, cutting or welding tools, sensors and other functional elements configured to perform the intended application for which the linear motor is used.

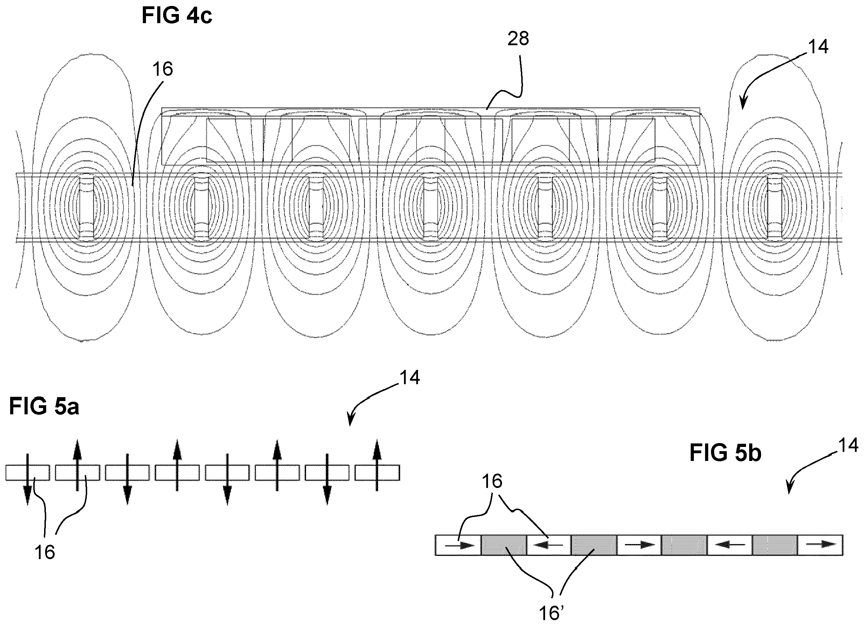

The stator 4 further comprises a permanent magnet assembly 14 comprising a plurality of juxtaposed magnetic segments 16 of changing polarity, the segments being either formed of individual magnets assembled together or by a single magnetic bar with alternatingly polarized sections, or a combination of the above. The changing polarities may form a juxtaposed N-S-N-S array as illustrated in figure 5a, or a Halbach array. The permanent magnet assembly is held by a non- ferromagnetic material support 18 that may be formed of a binding material 20 such as an epoxy resin, a thermoplastic or thermosetting polymer material, or a machined structure formed of aluminium or other non-ferromagnetic materials.

In a variant, the segments may be formed of individual magnets 16 interposed by ferromagnetic segments 16' assembled together as illustrated in figure 5a.

The permanent magnet assembly 14 is positioned centrally between the first and second sliders 6a, 6b and forms a common permanent magnet shared by both sliders 6a, 6b that are however independently driven. Contrary to the prior art systems with independently driven sliders, the permanent magnet assembly does not have a ferromagnetic core separating the magnet structure for the opposite sides of the stator. The mass of the linear motor, and in particular of the stator is thus reduced, which is advantageous to reduce inertia and increase acceleration of machine components. The cost of the linear motor, which is driven to a significant extent by the rare-earth materials necessary for the permanent magnets, is also reduced.

The linear motor motor with at least two independently controlled sliders according to the invention is not only light and fast, but also minimizes the quantity of components, including the quantity of permanent magnets needed in the stator as compared to prior art.

Each slider 6 comprises a slider frame 22 having top and bottom guide portions 24 slidably engaging the corresponding top and bottom guides 26 of the stator via bearings 25, and an electromagnet 26 comprising one or more coils 27, for electromagnetic coupling to the permanent magnet assembly of the stator.

The slider frame 22 may form an ironless support element for the electromagnet 26.

Different kinds of polyphase windings can be implemented. The sliders can have two phases, three phases or even more (the sentence "one or more coils" cover all the cases). The coils may be supported in an ironless structure (with or without a ferromagnetic backing plate).

In embodiments, it is also possible to use a ferromagnetic lamination stack with the coils on the slider (with or without teeth).

The electromagnet 26 of each gripper 6a, 6b are connected to a respective controller 8a, 8b to form an independently controlled electromagnet coupling magnetically to the common central permanent magnet assembly.

In a variant, the electromagnet of each slider may further comprise a ferromagnetic backing plate 28 mounted on an outer side of the coils 26 relative to the permanent magnet assembly 14 in order to improve coupling of the magnetic field generated by the electromagnet to the permanent magnet assembly. The ferromagnetic backing plate 28 may also help to reduce cogging of the motor.

The coils of the electromagnet 26 may be supported on a slider frame and optionally embedded in a thermoplastic or thermosetting material or held by a thin plate so as to have the coil facing a side of the permanent magnet assembly with a small airgap for optimal coupling of the electromagnets to the permanent magnet assembly. Although the absence of a central ferromagnetic core separating permanent magnets on the left and right side may lead to a coupling of the slider electromagnets when they are facing each other, in independently controlled situations this arises rarely since the sliders are rarely in opposite static positions in most applications. Moreover, in such static opposite positions even though there is some magnetic interference between the opposing grippers, since the magnitude of the coupling between the permanent magnet assembly and the electromagnet of each gripper is of much higher intensity than the interference between the opposed sliders, accurate independent control of the sliders is not adversely affected.

In a variant, it is possible to have on a permanent magnet assembly more than one slider on one side of the stator, it being understood that the travel of sliders guided on the same side of the stator needs to be controlled in a manner that the sliders do not collide.

The ferromagnetic backing plate may advantageously comprise a rhombus or slanted generally parallelepiped shape, for instance as schematically illustrated in Figure 4c.

The ferromagnetic backing plate 28 is mainly used to guide the magnetic field as illustrated in figure 4c in order to avoid a flux linkage inside the tools on the slider (Z-theta actuator as an example). The ferromagnetic plate acts as a kind of shielding. The backing plate 28 slightly increases the force and generates a small attraction between the slider and the permanent magnet assembly 14. In order to reduce the cogging force (also called "detent force"), a simple rectangular shape with appropriate dimensions may be used. However, in an embodiment, the rhombus shape preferably comprises an inclination angle $\beta$ typically between 0.7 $\alpha$ and 1.6 $\alpha$

$$\alpha = \arctan\left(\frac{\tau_{\mathrm{p}}}{Z}\right),$$

where $\alpha$ is given by where $\mathbf{Z}$ is the magnet segment height (in a direction orthogonal to the slider displacement direction A) and $2\tau_{\mathbf{p}}$ is the magnetic period. $\beta = \alpha$ is an advantageous solution.

In order to reduce eddy current losses, the ferromagnetic backing plate 28 may be structured with slots 31.

Linear motor 2

**Stator 4**

    Support frame 10
    Guide 12

        Bearing 25

    Permanent magnet assembly 14

        Magnetic segments 16
        Iron segments 16'
        Support 18

            Binding material (e.g. epoxy resin) 20

**Slider 6**
**First slider 6a**
**Second slider 6b**

    Slider Frame 22

        Guide portion 24

            Bearing 25

    Electromagnet 26

        Coil(s) 27

    ferromagnetic backing plate 28
    functional member (tool, sensor) 30

**Controller 8**

First controller (or controller channel) 8a
Second controller (or controller channel) 8b

slider displacement direction A
angle of inclination of rhombus $\beta$

**Claims**

1. Linear motor (2) comprising a stator (4) having first and second guides (12) on opposite sides of the stator, and at least two sliders (6) including a first slider (6a) and a second slider (6b) mounted respectively on said first and second guides (12) on opposite outer sides of the stator, each slider comprising a slider frame (22) having a guide portion (24) slidingly coupled to the guides (12) of the stator, each slider comprising an electromagnet connected to a controller (8), a first controller (8a) connected to the electromagnet (26) of the first slider and a second controller (8b) connected to the electromagnet of the second slider (6b) for independent control of displacement of each of the first and second sliders, each slider configured to carry a functional member (30) such as a tool, sensor or gripper, **characterized in that** the stator (4) comprises a single permanent magnet assembly (14) without any central ferromagnetic core, formed of a row of juxtaposed magnetic segments (16) of changing polarity, the permanent magnet assembly coupling electromagnetically to the electromagnets of both first and second sliders.

2. Linear motor according to the preceding claim, wherein the magnetic segments (16) of the permanent magnet assembly (14) are embedded in a non-ferromagnetic binding material.

3. Linear motor according to the preceding claim, wherein the non-ferromagnetic binding material includes any one of a thermosetting polymer, a thermoplastic polymer, an epoxy resin.

4. Linear motor according to any preceding claim, wherein the electromagnet of each of the first and second sliders comprises a plurality of coils mounted on a slider frame (22) of a non-ferromagnetic material.

5. Linear motor according to the preceding claim, wherein each of the first and second sliders comprise a ferromagnetic backing plate positioned on an outer side of the coils with respect to the permanent magnet assembly and extending across said plurality of coils.

6. Linear motor according to the preceding claim, wherein the ferromagnetic backing plate has a substantially rhombus shape.

7. Linear motor according to the preceding claim, wherein the rhombus shape is inclined at an inclination angle $\beta$ between 0.7 $\alpha$ and 1.6 $\alpha$ where $\alpha$ is given by
$$\alpha = \arctan\left(\frac{\tau_p}{Z}\right),$$
where $Z$ is the magnet segment height in a direction orthogonal to the slider displacement direction (A) and $2\tau_p$ is the magnetic period.

8. Linear motor according to the preceding claim, wherein the inclination angle $\beta$ is between 0.9 $\alpha$ and 1.1 $\alpha$.

9. Linear motor according to the claim 6, wherein the rhombus shape is inclined at an inclination angle $\beta$ between 5° and 45°, preferably between 5° and 30°, more preferably between 10° and 25° with respect to an axis orthogonal to the direction (A) of translation of the sliders.

10. Linear motor according to any of the preceding claims 5-9, wherein the ferromagnetic backing plate comprises a plurality of slots (31) configured to reduce eddy currents.

FIG 1 (prior art)

**FIG 2**

EP 4 106 161 A1

FIG 3a

FIG 3b

EP 4 106 161 A1

**FIG 4a**

**FIG 4b**

**FIG 3c**

EP 4 106 161 A1

**FIG 4c**

**FIG 5a**

**FIG 5b**

Europäisches
Patentamt

European
Patent Office

Office européen
des brevets

# EUROPEAN SEARCH REPORT

Application Number

EP 21 18 0406

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 109 004 805 B (BEIJING INSTITUTE TECH; JINGGONG INTELLIGENT TECH CO LTD) 14 April 2020 (2020-04-14) | 1 | INV. H02K41/03 H02K16/02 |
| Y | * paragraphs [0002], [0003]; claim 1; figures 1,3 * | 2-6,9,10 | |
| X | US 2013/076159 A1 (CHUNG SHI UK [KR] ET AL) 28 March 2013 (2013-03-28) | 1 | |
| Y | * paragraphs [0063], [0064]; figure 13 * | 2-6,9,10 | |
| Y | EP 2 333 942 A1 (SABANCI UNIVERSITY [TR]; FUJITEC KK [JP]) 15 June 2011 (2011-06-15) * paragraphs [0009], [0011]; figure 1 * | 1-6,9,10 | |
| Y | CN 100 592 609 C (HARBIN INST OF TECHNOLOGY) 24 February 2010 (2010-02-24) * figure 9 * | 1 | |
| Y | CN 110 165 852 A (UNIV SHANDONG) 23 August 2019 (2019-08-23) * figures 1-3 * | 1 | TECHNICAL FIELDS SEARCHED (IPC) |
| Y | WO 2013/022402 A1 (AKRIBIS SYSTEMS PTE LTD [SG]; LIM HOWE YUEN [SG] ET AL.) 14 February 2013 (2013-02-14) * figures 2,3,4 * | 2,3 | H02K |
| Y | US 2012/098356 A1 (TAKEUCHI KESATOSHI [JP]) 26 April 2012 (2012-04-26) | 4-6,9,10 | |
| A | * paragraphs [0026], [0032], [0034] - [0036], [0048]; figures 1,2,4A,4B * | 7,8 | |
| A | DE 10 2012 204916 A1 (BECKHOFF AUTOMATION GMBH [DE]) 2 October 2013 (2013-10-02) * paragraph [0124]; figure 13 * | 6-9 | |

The present search report has been drawn up for all claims

| Place of search | Date of completion of the search | Examiner |
|---|---|---|
| The Hague | 19 November 2021 | Kovacsovics, Martin |

EPO FORM 1503 03.82 (P04C01)

## ANNEX TO THE EUROPEAN SEARCH REPORT
## ON EUROPEAN PATENT APPLICATION NO.

EP 21 18 0406

This annex lists the patent family members relating to the patent documents cited in the above-mentioned European search report.
The members are as contained in the European Patent Office EDP file on
The European Patent Office is in no way liable for these particulars which are merely given for the purpose of information.

19-11-2021

| Patent document cited in search report | | Publication date | Patent family member(s) | | Publication date |
|---|---|---|---|---|---|
| CN 109004805 | B | 14-04-2020 | NONE | | |
| US 2013076159 | A1 | 28-03-2013 | KR 20110120156 A | | 03-11-2011 |
| | | | US 2013076159 A1 | | 28-03-2013 |
| | | | WO 2011136475 A2 | | 03-11-2011 |
| EP 2333942 | A1 | 15-06-2011 | CN 102171915 A | | 31-08-2011 |
| | | | EP 2333942 A1 | | 15-06-2011 |
| | | | JP 5357485 B2 | | 04-12-2013 |
| | | | JP 2010088189 A | | 15-04-2010 |
| | | | KR 20110081811 A | | 14-07-2011 |
| | | | PL 2333942 T3 | | 30-04-2014 |
| | | | US 2011221282 A1 | | 15-09-2011 |
| | | | WO 2010038325 A1 | | 08-04-2010 |
| CN 100592609 | C | 24-02-2010 | NONE | | |
| CN 110165852 | A | 23-08-2019 | NONE | | |
| WO 2013022402 | A1 | 14-02-2013 | WO 2013022402 A1 | | 14-02-2013 |
| | | | WO 2013022403 A1 | | 14-02-2013 |
| US 2012098356 | A1 | 26-04-2012 | CN 102457156 A | | 16-05-2012 |
| | | | JP 2012090468 A | | 10-05-2012 |
| | | | US 2012098356 A1 | | 26-04-2012 |
| DE 102012204916 A1 | | 02-10-2013 | CN 104380585 A | | 25-02-2015 |
| | | | DE 102012204916 A1 | | 02-10-2013 |
| | | | EP 2831986 A2 | | 04-02-2015 |
| | | | US 2015048693 A1 | | 19-02-2015 |
| | | | WO 2013143950 A2 | | 03-10-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• EP 3509973 A1